# EUROPEAN PATENT SPECIFICATION

(11) **EP 1 701 467 B1**
(45) Date of publication and mention of the grant of the patent: **25.11.2009**
(21) Application number: 04802404.6
(22) Date of filing: 30.11.2004
(51) Int. Cl.: H04L 7/00, H04J 3/00

(54) **TRIBUTARY UNIT OF SYNCHRONOUS DIGITAL HIERARCHY AND SDH APPARATUS NODE**
ZUFÜHRUNGSEINHEIT EINER SYNCHRONEN DIGITALEN HIERARCHIE UND EINES SDH-VORRICHTUNGSKNOTEN
UNITE AFFLUENT D'UNE HIERARCHIE NUMERIQUE SYNCHRONE, ET NOEUD D'APPAREILS CORRESPONDANT

(30) Priority: 05.12.2003 CN 200320127259
(43) Date of publication of application: 13.09.2006
(73) Proprietor: Huawei Technologies Co., Ltd., Longgang District, Shenzhen, Guangdong Province 518129 (CN)
(72) Inventor: JIANG, Zhangzhen, Huawei Administration Building, Shenzhen, Guangdong 518129 (CN); PENG, Zhongwen, Huawei Administration Building, Shenzhen, Guang Dong 518129 (CN); TANG, Yong, Huawei Administration Building, Shenzhen, Guang Dong 518129 (CN); QUAN, Xingyue, Huawei Administration Building, Shenzhen, Guang Dong 518129 (CN)
(74) Representative: Kreuz, Georg Maria
(86) International application number: PCT/CN2004/001379
(87) International publication number: WO 2005/055510

(56) References cited:
- EP-A2- 1 091 513
- WO-A-03/032539
- CN-A- 1 398 064
- CN-A- 1 490 987
- US-A- 5 848 065
- US-A1- 2003 058 897
- ZHIYONG TAO; JIUMIN YANG; GUOHUI LIU: "The solution for RPR over MSTP system" APOC 2003: ASIA-PACIFIC OPTICAL AND WIRELESS COMMUNICATIONS. NETWORK ARCHITECTURES, MANAGEMENT, AND APPLICATIONS, vol. 5282, 4 November 2003 (2003-11-04), pages 898-907, XP008069654 Wuhan, China ISSN: 0277-786X
- GRABER ET AL.: "Multiservice switches and the service intelligent optical architecture for SDH/SONET Metro Networks" Bell Labs Technical Journal Lucent Technologies USA, vol. 8, no. 2, 17 September 2003 (2003-09-17), pages 111-127, XP002401519 ISSN: 1089-7089
- GRABER H.; ROCHE LA H.J.: 'Multiservice switches and the service intelligent optical architecture for SONET/SDH metro networks' BELL LABS TECHNICAL JOURNAL 17 September 2003, pages 111 - 127, XP002401519

## Description

### Field of the Invention

The present invention relates to the field of communication technology, and more particularly, to a Synchronous Digital Hierarchy (SDH) tributary module and an SDH equipment node using this module.

### Background of the Invention

A Multiple Service Transport Platform (MSTP) node based on Synchronous Digital Hierarchy (SDH) refers to a multiple service node that implements, based on an SDH platform, access, processing and transport of services for Time Division Multiplex (TDM) mode, Asynchronous Transfer Mode (ATM), Ethernet, Resilient Packet Ring (RPR), etc., and provides unified network management.

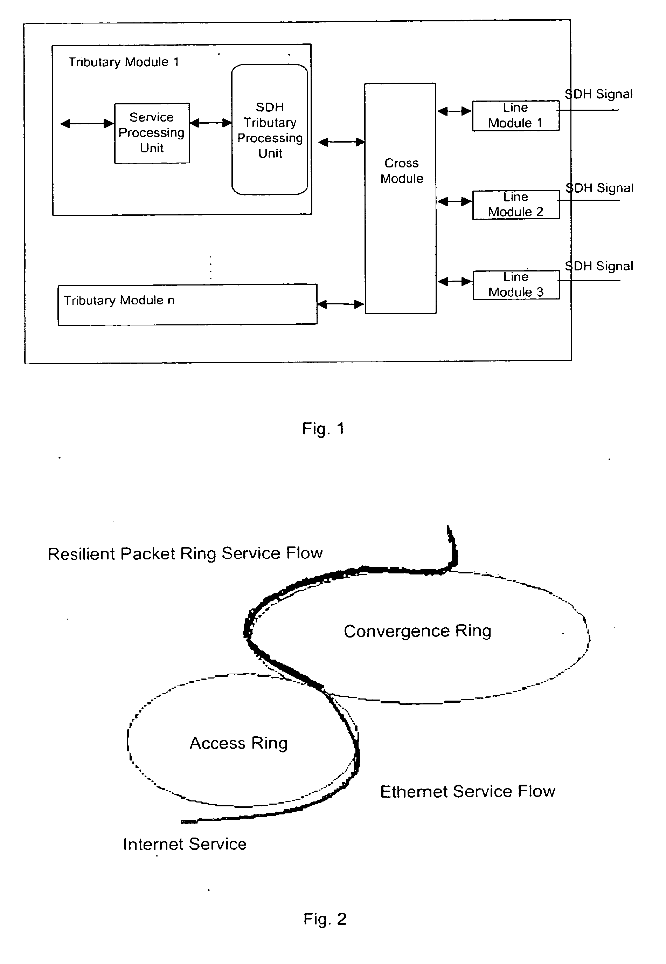

SDH divides a physical channel into several time slots of different levels by time division multiplexing, each of the time slots transporting a different service. As shown in Fig. 1, an SDH equipment node usually employs a multi-W structure, which is generally divided into a line module, a cross module and a tributary module separated from each other. The line module is responsible for sending SDH signal; the cross module provides dispatch and cross of SDH signal; and the tributary module is responsible for processing SDH signal. One tributary module includes one SDH tributary processing unit that multiplexes and demultiplexes the SDH signals and one service processing unit that maps and unmaps the SDH signals and is connected directly with a local interface. For example, an ATM tributary module provides mapping of ATM signal to SDH signal and unmapping of SDH signal to ATM signal, and a Plesiochronous Digital Hierarchy (PDH) tributary module provides mapping of PDH signal to SDH signal and unmapping of SDH signal to PDH signal. An Ethernet service is mapped into an SDH signal in a tributary unit of a network element A in the SDH network, the SDH signal is cross multiplexed and then transmitted to another network element B through a line module, and an Ethernet processing module (a tributary module) of the network element B unmaps the SDH signal and sends out the Ethernet service. Currently, it is a general approach to use different tributary modules for different services (tributary modules 1-n as shown in Fig. 1).

Different tributary module processes different service, the main reason for which lies in different characteristics, different interfaces and different implementing methods for various services. For example, an ATM tributary module needs to resolve an ATM cell of 52 bytes out of SDH time slot to send to an ATM interface; while an Ethernet tributary module needs to resolve an Ethernet traffic of indefinite length out of an SDH time slot to send to an Ethernet interface.

When a service flow is to be carried by a plurality of different service signals, a plurality of different tributary modules have to be used to implement mapping and unmapping between SDH signals and service signals, and it needs to incorporate a network line or other equipment to implement. Fig.2 shows a structural diagram of a two-level SDH network; in this two-level SDH network, the SDH network at access layer (access ring) transmits Ethernet service, and the SDH network at convergence layer (convergence ring) transmits RPR service, the SDH network at access layer being connected with an edge node of the SDH network at convergence layer. Both Ethernet and RPR are used to carry IP traffic, and the IP traffic flow needs to be sent from the SDH network at access layer to a central node of the SDH network at convergence layer, that is to say, the IP traffic over Ethernet service is sent to an edge node of the SDH network at convergence layer, unmapped into an Ethernet service by an Ethernet tributary module, accessing to an RPR processing module via a network line or other equipment and mapped into an SDH signal, and finally sent out from the central node of the SDH network at convergence layer.

As can be seen from the above, the existing SDH tributary module has poor signal processing capability, which leads to the following shortcomings of the SDH equipment node.

1. When two or more different service signals are required to carry one service flow, two or more tributary modules (usually two separate circuit boards) are required to be incorporated, thus the cost of network is increased.

2. When more than two services are to be interconnected, extra network line and other equipment or device to connect different tributary modules are required to be incorporated, thus the difficulty in network maintenance is increased and the reliability of network is lowered.
The article of Zhiyong Tao, Jiumin Yang and Guohui Liu "The solution for RPR over MSTP system", APOC 2003: Asia-Pacific Optical and Wireless Communications. Network Architectures, Management, and Applications, vol. 5285, 4 November 2003 (2003-11-04), - 6 November 2004 (2004-11-06) pages 898-907, discloses a solution of a Resiliant Packet Ring (RPR) over Multi-Service Transport Platform (MSTP) System. In particular, Fig. 2 of this article shows a logical realisation on MSTP embedded RPR function. However, there is no disclosure how to physically arrange the VC map, ATM switch, HDLC/GFP/LAPS, etc..

### Summary of the Invention

The technical problem to be solved by this invention is to provide a SDH tributary unit supporting multiple service processing; the present invention further provides an SDH equipment node using the SDH tributary module, so as to reduce the cost of SDH equipment, facilitate the maintenance, and improve the reliability of network.

A synchronous digital hierarchy tributary module supporting multiple service processing provided by this invention is defined in claim 1.

According to a preferred embodiment, each of the service processing units is connected directly to a corresponding local interface respectively.

The tributary module further includes a multiple service cross processing unit which is used to implement interconnection among different services, each service processing unit being connected to a local interface through the multiple service cross processing unit.

Furthermore, the SDH tributary processing unit separates out the service signals corresponding to different service processing units, according to different time slots corresponding to the SDH signals of different services.

A cross module of the SDH equipment node time-division multiplexes multiple service SDH signals into one SDH signal.

The services to be sent from the local to the SDH side are mapped by the service processing units respectively and sent to the SDH tributary processing unit for multiplexing, different services being multiplexed in different time slots, and the cross module of the SDH equipment node transmits the signals of different time slots to the corresponding line modules or other tributary modules.

An SDH equipment node provided by the invention is defined in claim 4.

For the above-mentioned SDH equipment node, the SDH tributary processing unit separates out the service signals corresponding to different service processing units, according to different time slots corresponding to the SDH signals of different services.

The cross module of the SDH equipment node time-division multiplexes multiple service SDH signals into one SDH signal.

The services to be sent from the local to the SDH side are mapped by the service processing units respectively and sent to the SDH tributary processing unit for multiplexing, different services being multiplexed in different time slots, and the cross module of the SDH equipment node transmits the signals of different time slots to the corresponding line modules or other tributary modules.

The beneficial effect of the invention is: one tributary module generally uses one circuit board, while by using this invention, one tributary module can support two or more services and meet various service needs, thus remarkably decreasing the number of boards, and interconnection between two services can be implemented directly without using external network line or equipment. For an SDH node device employing the SDH tributary module, it improves the signal processing capability as a whole. Compared to the prior art, the SDH equipment has a lower cost with the same service processing capability, facilitates the maintenance of the SDH equipment and improves the reliability of the SDH equipment itself and the entire network. By using this invention, it only needs a single board to support, without external network line, interconnection among various services, for example, convergence of an Ethernet service onto a RPR.

### Brief Description of the Drawings

Fig. 1 is a structural diagram of a conventional SDH equipment node;

Fig. 2 is a structural diagram of a two-level SDH network;

Fig. 3 is a structural diagram of an SDH equipment node according to an embodiment of the present invention;

Fig. 4 is a signal processing diagram of an SDH equipment node according to an embodiment of the present invention.

### Detailed Description of the Embodiments

The present invention will be described below in further detail with reference to the drawings and embodiments.

The invention provides a Synchronous Digital Hierarchy (SDH) tributary module supporting multiple service processing, wherein when a service flow is to be carried by a plurality of different service signals, one and the same tributary module can be used to implement two kinds of different service processing, thus avoiding using a plurality of different tributary modules to implement mapping and unmapping between SDH signals and service signals, and the problem of incorporating network line or other equipment.

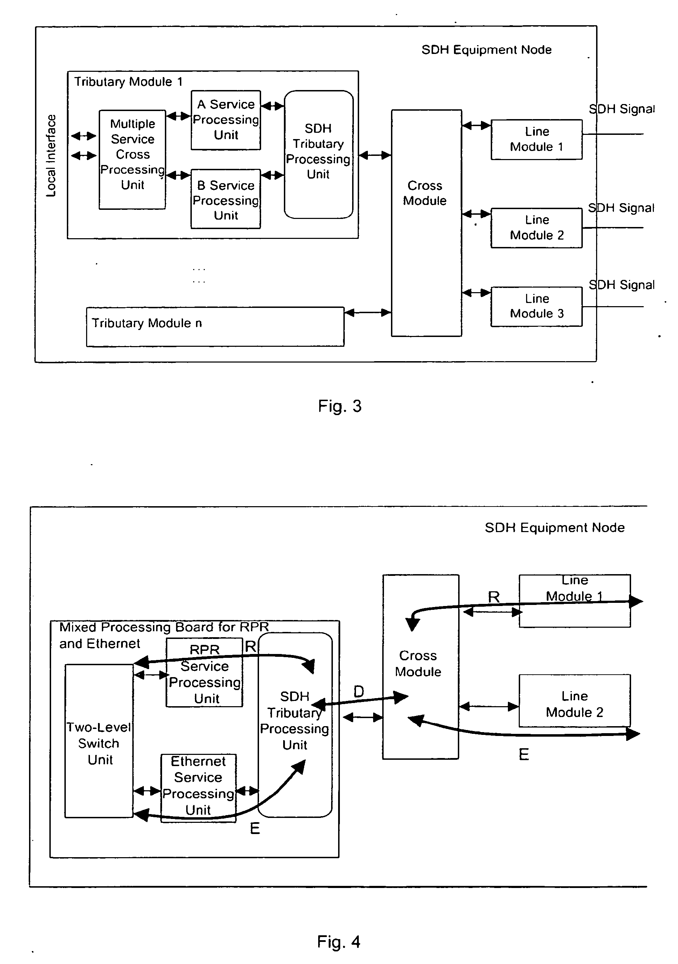

As shown in Fig.3, which is a structural diagram of an SDH equipment node according to an embodiment of the present invention, the SDH equipment node includes a plurality of line modules (such as line module 1, line module 2, line module 3 etc.), an SDH cross module, a plurality of tributary modules (tributary modules 1-n in Fig.3) and a plurality of local interfaces (simply drawn in the figure). The line modules are connected respectively to the cross module and the cross module is connected to all of SDH tributary modules. The SDH tributary modules are connected to the corresponding local interfaces. The line module is responsible for sending SDH signal; the cross module provides dispatch and cross of SDH signal; and the tributary module is responsible for processing SDH signal. As shown in Fig.3, the tributary module provided in embodiments of the invention employed in the SDH equipment node includes an SDH tributary processing unit which multiplexes and demultiplexes multiple service signals in an SDH signal, and two or more service processing units (A service processing unit and B service processing unit as shown in Fig. 3) which map and unmap corresponding service signals; the SDH tributary processing unit is connected with the service processing units respectively, and each service processing unit can be connected to a local interface directly. In practice, after the signals from the SDH side are demultiplexed by the SDH tributary processing unit, the service signals corresponding to different service processing units are separated out of the demultiplexed signals according to different time slots corresponding to the SDH signals of different services, and the service signals are sent to the corresponding service processing units for unmapping; on the other hand, the services to be sent from the local to the SDH side are mapped by the service processing units respectively and sent to the SDH tributary processing unit for multiplexing, different services being multiplexed in different time slots, that is to say, the cross module of the SDH equipment node time-division multiplexes the SDH signals of multiple services into one SDH signal, and the cross module of the SDH equipment node transmits the signals of different time slots to the corresponding line modules or other tributary modules. When service interconnection is required, it can implement the interconnection among different services by connecting the corresponding service processing units via a multiple service cross processing unit.

Taking the processing of the service from the SDH side to a local interface as an example, the present invention is further described as the following.

1. At the SDH side, the equipment is configured to send two or more different services to the cross module via the line modules, the cross module performs time division multiplexing on the SDH signals of the individual services, that is to say, in the SDH cross module, the SDH signals of the individual services are time-division multiplexed into one SDH signal which is sent to the tributary module for processing.

2. In the tributary module, the SDH tributary processing unit demultiplexes the received SDH signal, and separates out different services according to different time slots corresponding to the SDH signals of two or more services.

3. After being demultiplexed, different services are sent to different service processing units for processing, unmapping of each signal being performed by the corresponding service processing unit.

4. Different services can be interconnected via the multiple service cross processing unit of the tributary module through the unmapped signals. For example, A service and B service shown in Fig. 3 can be interconnected via the multiple service cross processing unit; also, the unmapped signals can be sent to a local interface directly.

Contrary to the above-mentioned procedure, various services sent from a local interface or the multiple service cross processing unit to the SDH side are mapped by the corresponding service processing units respectively and sent to the SDH tributary processing unit for multiplexing, different services being multiplexed in different time slots, and the cross module transmits the different time slots to the corresponding line modules or other tributary modules.

As shown in Fig.4, by using this invention, it only needs a single board to enable Ethernet service to be converged onto an RPR without external network line. Signal E in the figure is an Ethernet service signal, signal R is an RPR service signal, and signal D is a time-division multiplexed signal. An RPR service processing unit and an Ethernet service processing unit are connected via a multiple service cross processing unit (that is, a two-level switch unit in the figure). Therefore, different service processing units are connected via the switch unit directly, that is to say, Ethernet service can be converged onto an RPR, thereby implementing the interconnection between Ethernet service and RPR service without external network line, and reducing the cost of equipment.

In this invention, one tributary module can implement mapping and unmapping of multiple different services according to different time slots; one tributary module uses one circuit board, which can thus support various services simultaneously and can also implement interconnection among various services, it can therefore remarkably decrease the number of boards, and avoid using external network line or equipment.

## Claims

1. A synchronous digital hierarchy tributary module supporting multiple service processing, including a Synchronous Digital Hierarchy, hereinafter referred to as SDH, the SDH tributary module including an SDH tributary processing unit for multiplexing and demultiplexing multiple service signals in an SDH signal; the SDH tributary module including at least two service processing units each for mapping and unmapping a different service signal of the multiple service signals, the at least two service processing units being connected with the SDH tributary processing unit respectively;
**characterized in that** the SDH tributary module further includes a multiple service cross processing unit which is adapted to implement interconnection among different services, each service processing unit being connected to a local interface through the multiple service cross processing unit; and
that the SDH tributary processing unit is adapted to separate out the service signals corresponding to different service processing units, according to different time slots corresponding to the SDH signals of different services.

2. The synchronous digital hierarchy tributary module supporting multiple service processing according to claim 1, wherein a cross module of an SDH equipment node time-division multiplexes multiple service SDH signals into one SDH signal.

3. The synchronous digital hierarchy tributary module supporting multiple service processing according to claim 2, wherein the services to be sent from the local to the SDH side are mapped by the service processing units respectively and sent to the SDH tributary processing unit for multiplexing, different services being multiplexed in different time slots, and the cross module of the SDH equipment node transmits the signals of different time slots to the corresponding line modules or other tributary modules.

4. An SDH equipment node including a plurality of local interfaces, a plurality of line modules, a cross module connected with the line modules respectively and a plurality of SDH tributary modules according to any of claims 1-3 connected with the cross module respectively.

## Patentansprüche

1. Zubringermodul der Synchron-Digital-Hierarchie, das Mehrfachdienst¬verarbeitung unterstützt, mit einer im Folgenden als SDH bezeichneten Synchron-Digital-Hierarchie,
wobei das SDH-Zubringermodul eine SDH-Zubringerverarbeitungseinheit zum Multiplexen und Demultiplexen von mehreren Dienstsignalen in einem SDH-Signal enthält;
wobei das SDH-Zubringermodul mindestens zwei Dienst¬verarbeitungs¬einheiten jeweils zum Mapping und Unmapping verschiedener Dienstsignale der mehreren Dienstsignale enthält, wobei die mindestens zwei Dienstverarbeitungseinheiten jeweils mit der SDH-Zubringerverarbeitungseinheit verbunden sind;
**dadurch gekennzeichnet, dass** das SDH-Zubringermodul ferner eine Mehrfachdienst-Kreuz¬verarbeitungs¬einheit enthält, die dafür ausgelegt ist, Verbindungen zwischen verschiedenen Diensten zu implementieren, wobei jede Dienstverarbeitungseinheit durch die Mehrfachdienst-Kreuzverarbeitungseinheit mit einer lokalen Schnittstelle verbunden ist; und
dass die SDH-Zubringerverarbeitungseinheit dafür ausgelegt ist, die verschiedenen Dienstverarbeitungs¬einheiten entsprechenden Dienstsignale gemäß verschiedenen Zeitschlitzen zu trennen, die den SDH-Signalen verschiedener Dienste entsprechen.

2. Zubringermodul der Synchron-Digital-Hierarchie, das Mehrfachdienst¬verarbeitung unterstützt, nach Anspruch 1, wobei ein Kreuzmodul eines SDH-Einrichtungsknotens mehrere Dienst-SDH-Signale zu einem SDH-Signal zeitmultiplext.

3. Zubringermodul der Synchron-Digital-Hierarchie, das Mehrfachdienst¬verarbeitung unterstützt, nach Anspruch 2, wobei die von der lokalen zu der SDH-Seite zu sendenden Dienste jeweils durch die Dienst¬verarbeitungs¬einheiten gemappt und zum Multiplexen zu der SDH-Zubringer¬verarbeitungs¬einheit gesendet werden, wobei verschiedene Dienste in verschiedenen Zeitschlitzen gemultiplext werden und das Kreuzmodul des SDH-Einrichtungsknotens die Signale verschiedener Zeitschlitze zu den entsprechenden Anschlussmodulen oder anderen Zubringermodulen sendet.

4. SDH-Einrichtungsknoten mit mehreren lokalen Schnittstellen, mehreren Anschlussmodulen, einem jeweils mit den Anschlussmodulen verbundenen Kreuzmodul und mehreren SDH-Zubringermodulen nach einem der Ansprüche 1-3, die jeweils mit dem Kreuzmodul verbunden sind.

## Revendications

1. Module tributaire d'une hiérarchie numérique synchrone prenant en charge un traitement de multiples services, incluant une Hiérarchie Numérique Synchrone, ci-dessous appelée hiérarchie SDH,
le module tributaire de la hiérarchie SDH incluant une unité de traitement tributaire de la hiérarchie SDH en vue du multiplexage et du démultiplexage de multiples signaux de services dans un signal de la hiérarchie SDH,
le module tributaire de la hiérarchie SDH incluant au moins deux unités de traitement de services destinées chacune au mappage et au mappage inverse d'un signal différent de service parmi les multiples signaux de services, les au moins deux unités de traitement de services étant reliées respectivement à l'unité de traitement tributaire de la hiérarchie SDH,
**caractérisé en ce que** le module tributaire de la hiérarchie SDH inclut en outre une unité de traitement croisé de multiples services qui est conçue pour mettre en oeuvre une interconnexion parmi différents services, chaque unité de traitement de services étant reliée à une interface locale par l'intermédiaire de l'unité de traitement croisé de multiples services, et
**en ce que** l'unité de traitement tributaire de la hiérarchie SDH est conçue pour séparer les signaux de services correspondant à différentes unités de traitement de services, en fonction de tranches de temps différentes correspondant aux signaux de la hiérarchie SDH de différents services.

2. Module tributaire d'une hiérarchie numérique synchrone prenant en charge un traitement de multiples services selon la revendication 1, dans lequel un module croisé d'un noeud d'équipements de la hiérarchie SDH multiplexe par répartition dans le temps des signaux de la hiérarchie SDH de multiples services en un seul signal de la hiérarchie SDH.

3. Module tributaire d'une hiérarchie numérique synchrone prenant en charge un traitement de multiples services selon la revendication 2, dans lequel les services à envoyer depuis le côté local vers le côté de la hiérarchie SDH sont respectivement mappés par les unités de traitement de services et envoyés à l'unité de traitement tributaire de la hiérarchie SDH en vue d'un multiplexage, différents services étant multiplexés dans différentes tranches de temps, et le module croisé du noeud d'équipements de la hiérarchie SDH transmet les signaux de différentes tranches de temps aux modules correspondants de lignes ou à d'autres modules tributaires.

4. Noeud d'équipements d'une hiérarchie SDH incluant une pluralité d'interfaces locales, une pluralité de modules de lignes, un module croisé relié respectivement avec les modules de lignes et une pluralité de modules tributaires de la hiérarchie SDH, selon l'une quelconque des revendications 1 à 3, reliés respectivement avec le module croisé.
